# EUROPEAN PATENT APPLICATION

(11) **EP 2 088 301 A2**
(43) Date of publication of application: **12.08.2009**
(21) Application number: 08019737.9
(22) Date of filing: 12.11.2008
(51) Int. Cl.: F02B 41/04, F02B 21/00

(54) **Internal combustion engine with shared holding tank in cylinder head for elevated expansion ratio**

(30) Priority: 05.12.2007 US 999364
(71) Applicant: Robinson, Barnett J., Newton, Mass. 02458 (US)
(72) Inventor: Robinson, Barnett J., Newton, Mass. 02458 (US)
(74) Representative: Heiland, Karsten

(57) **Abstract**

An internal combustion engine with a plurality of cylinders operating in a four-stroke mode, with pistons moving with reciprocating motion, employs at least one holding tank shared among a plurality of cylinders, and wherein the holding tank conveys a pre-combustion gas (fuel-air mix in gasoline engines) from the cylinders via a return manifold for reinsertion into an intake manifold of the engine. Valving extracts a quantity of pre-combustion gas from a cylinder into the holding tank during a compression stroke for subsequent discharge into the return manifold to reduce the compression ratio to a value less than the expansion ratio.

## Description

### RELATED APPLICATION

This application is a continuation-in-part of original application Number 11/409,753 filed April 24, 2006, and a continuation-in-part of application Number 11/810,908 filed June 7, 2007 which is a continuation-in-part of said application Number 11/409,753.

### FIELD OF THE INVENTION

This invention relates to an internal combustion engine having a cylinder with a translating piston therein, and employing a holding tank connecting between the combustion chamber of the cylinder and an intake manifold of the engine for providing that the expansion ratio of an expansion (power) stroke is greater than the compression ratio of a compression stroke, and wherein the holding tank is shared among a plurality of cylinders of the engine.

### BACKGROUND OF THE INVENTION

An internal combustion engine, wherein an elevated expansion ratio is provided by utilization of a holding tank, is described in U.S. Patent 6,907,859 of B. J. Robinson (Robinson), the inventor of the present invention. For appreciation of the present invention, it is useful to review the operations of the four-stroke form of the gasoline engine and the diesel engine, and particularly the description of the Robinson engine. Information on the construction of the engine, disclosed in the Robinson patent, is incorporated herein by reference.

In the four-stroke form of the gasoline engine, the movement of a piston in its cylinder is characterized by four strokes of the piston, in conjunction with operation of an intake valve and an exhaust valve generally located in the cylinder head. The four strokes occur in a repeating sequence, the sequence of the four strokes being: an induction stroke, a compression stroke, a power (or expansion) stroke, and an exhaust stroke. During the induction stroke, the piston moves away from the head of the cylinder to produce a vacuum that draws in a mixture of air and fuel vapors via the intake valve. During the compression stroke, the intake and the exhaust valves are closed, and the piston moves towards the cylinder head to compress the air-fuel mixture. Approximately at the beginning of the power stroke, there is ignition of the air-fuel mixture and, during the power stroke, the expanding gases produced by the combustion of the fuel drive the piston away from the cylinder head. During the exhaust stroke, the piston moves towards the cylinder head to drive the exhaust gases out of the cylinder via the exhaust valve. In the usual construction of such an engine, an intake manifold is provided for bringing air and fuel from a carburetor or fuel-injection assembly to the intake ports of the cylinders, and an exhaust manifold is provided for removal of combustion gases via exhaust ports of the cylinders.

It is useful to compare operation of the gasoline engine with the diesel engine. In the case of the gasoline engine, both fuel and air are present in the cylinder during the compression stroke. The temperature produced in the gases within the cylinder is below the ignition temperature of the air-fuel mixture so as to avoid premature ignition of the air-fuel mixture. Ignition is produced by an electric spark of a spark plug, mounted within the cylinder head. In a modern engine, activation of the spark plug at an optimum moment, relative to the time of occurrence of the power stroke, is provided by a computer. In the case of the diesel engine, only the air is present in the cylinder during the compression stroke. The geometry of the piston within the cylinder of the diesel engine differs somewhat from the corresponding geometry of the gasoline engine such that the compression stroke of the diesel engine provides significantly more compression of the gases within the cylinder (a compression ratio of approximately 15:1) than occurs in the gasoline engine (a compression ratio of approximately 8:1). As a result, in the diesel engine, the temperature of the air is raised by the compression stroke to a temperature high enough to ignite fuel. Accordingly, in the diesel engine, the fuel is injected into the cylinder at approximately the beginning of the power stroke, and is ignited by the high air temperature.

It is observed furthermore, that in the usual construction of a gasoline engine and of a diesel engine, the ratio of the expansion of the volume of cylinder gases, final volume divided by initial volume of the power stroke, is equal to the ratio of the compression of the volume of the cylinder gases, initial volume divided by final volume of the compression stroke, for engines without the feature of elevated expansion ratio provided in the Robinson patent. The expansion of the cylinder gases in the power stroke is accompanied by a reduction in the temperature of the cylinder gases. Well-known theoretical considerations show that an important consideration in determining the efficiency of the engine is the ratio of the gas temperature at the beginning of the power stroke to the gas temperature at the end of the power stroke. A greater temperature ratio is obtained in the case of the diesel engine than for the gasoline engine. This is one of the reasons that the diesel engine can operate more efficiently than the gasoline engine.

The engine of the Robinson patent includes, for each cylinder, an intake valve and an outlet valve, and furthermore includes a return valve and a discharge valve. The return valve closes and opens a passage between the internal space of a cylinder and its holding tank, and the discharge valve closes and opens a passage between the holding tank and a return manifold which, in turn, returns the engine gases from the holding tank to the intake manifold of the engine. In Robinson, the holding tank is formed within an arm of the return manifold, the return valve is located in a return port of the cylinder head at an outboard end of the manifold arm, and the discharge valve is located at the inboard end of the manifold arm adjacent to a central chamber of the return manifold. The function of the holding tank, in conjunction with the additional valves and the return manifold, is to give the engine an elevated expansion ratio while simultaneously being able to reduce the compression ratio for additional fuel savings. In the operation of the Robinson engine, gasses extracted from respective ones of the cylinders during a portion of the compression stroke (an air-fuel mixture in the case of a gasoline engine, and air in the case of a diesel engine) are recirculated via the respective holding tanks and the return manifold to be reinserted into the cylinders of the engine.

Other examples of engines employing additional manifolds and valves are presented in Date, US patent 3,878,826, and Amano, US patent 4,192,265.

In order to facilitate construction of an engine requiring the holding tank and additional valves, such as the engine of the Robinson patent, it is believed that it would be advantageous to configure the cylinder head to include within the cylinder head, in addition to the intake and the outlet valves, also the return and the discharge valves plus a holding tank. This would enable these components of the engine to be assembled as part of the cylinder head, and then the completed cylinder head would be joined to the cylinder block, the three manifolds (intake, exhaust and return), and other parts of the engine system. Such construction of an engine is disclosed in the aforementioned application Number 11/409,753, and has provided the desired convenience in construction of the engine. However, in that construction, it has been found that each of the holding tanks, itself, adds a considerable volume to the overall size of the engine. In the case of a passenger car, wherein it is desirable, both for reasons of styling and for driver visibility, to minimize the physical size of the engine, a need develops to reduce the contribution of the holding tanks to the overall physical size of the engine.

### SUMMARY OF THE INVENTION

The foregoing need for construction of an engine embodying an elevated expansion ratio and reduced compression ratio is met, and other advantages are provided by an engine, constructed in accordance with the invention, wherein a third manifold, to be referred to as a return manifold, connects with a return port in each of the cylinders to remove a portion of the gases present in each of the cylinders during their respective compression strokes for reinsertion into a stream of air-fuel mixture provided by the carburetor or fuel-injection assembly. The cylinder head of each of the engine cylinders is provided with three ports, namely, an intake port with an associated intake valve, an exhaust port with an associated exhaust valve, and a return port with an associated return valve. An intake manifold of the engine connects via the intake ports and the intake valves with respective ones of the engine cylinders, an exhaust manifold of the engine connects via the exhaust ports and the exhaust valves with respective ones of of the engine cylinders, and the return manifold connects via the return ports and the return valves with respective ones of the engine cylinders.

In an embodiment of the invention wherein the engine has a plurality of holding tanks located within a cylinder head of the engine, the return manifold comprises a relatively large central chamber with a set of arms extending from the central chamber to respective ones of the holding tanks. With each of the holding tanks, an inlet passage to the tank from a cylinder is provided with a return valve, and an outlet passage from the tank to the return manifold is provided with a discharge valve. An exit passage of the central chamber communicates returned air-fuel mix to a location at the carburetor or fuel injection assembly, in the case of the gasoline engine, at which location the returning air-fuel mix combines with the air-fuel mix provided by the carburetor or fuel injection assembly, this location being ahead of the entrance to the intake manifold. In the case of a diesel engine, the exit passage of the central chamber communicates air to a location at the inlet to the source of compressed air.

The operation of the return valves is synchronized with the operation of the intake valves. Such synchronization can be accomplished by driving the return valve of an individual one of the cylinders by an additional cam on a camshaft which operates either one or both of the intake and exhaust valves of the cylinder, or by use of a further camshaft. The return valve is open during a portion of the compression stroke of its cylinder. During an open state of the return valve, the corresponding discharge valve is closed, and the interior space of the cylinder connects via the return port to the interior space of the corresponding holding tank. This effectively enlarges the interior size of the cylinder during the portion of the compression stroke when the return valve is open. The volume of the holding tank is essentially equal to the volume of the cylinder at the point in time wherein the piston has moved approximately half way along the compression stroke. Therefore, at this point in time, half of the charge of the cylinder, namely the air-fuel mix (of the gasoline engine) or the air (of the diesel engine) is located in the cylinder and the other half of the charge is located in the holding tank.

Thereupon, the return valve is closed, and the compression stroke continues with only half of the charge being present in the cylinder. The withdrawn charge is held within the holding tank until a later moment when it can be discharged into the return manifold. The discharging is accomplished by an opening of the discharge valve. In the practice of the invention, the discharging of the returned charges (gases) of the various holding tanks is accomplished in a manner which encourages a relatively smooth flow of the returned charges from the return manifold into the inlet to the carburetor or the fuel-injection assembly. The smooth flow of the returned air or air-fuel mix ensures that subsequent metering of the air or air-fuel mix can be accomplished in a normal manner without disruption by the process of extracting air or air-fuel mix from the cylinders.

The foregoing advantage in construction of an engine, wherein a cylinder head contains the holding tank with return and discharge valves along with intake and exhaust valves, is attained, and other advantages are provided, by a valve assembly employing plural valves with a holding tank, in accordance with the invention, wherein valve heads and their respective valve stems are arranged within a housing to define a space within the interior of the housing for the holding tank. A void is constructed within the interior space of the housing to serve as the holding tank.

The valve stems of the return valve and the discharge valve are spaced apart transversely from each other so as to enable the stem of the return valve to pass outside of the holding tank for placing the return valve head at an entrance to the holding tank, while the discharge valve head is located at an exit of the holding tank. This arrangement of the valve stems permits a standard form of retraction (return) spring to be used for each of the return valve stem and the discharge valve stem.
The cylinder head is constructed of an upper section and a lower section, wherein the upper section and the lower section may be coupled together via a gasket to facilitate manufacture, and wherein the lower section is disposed between the upper section and the cylinder block. One or more holding tanks, depending on the number of the cylinders, are located at an interface between the two sections. Thereby, during assembly of the cylinder head, prior to a joining of the two sections via the gasket, access is available to the interior of a holding tank for insertion of the discharge valve into the upper section of the housing. This facilitates construction.

Typically, in the case of a gasoline engine, the volume of the holding tank is equal to approximately one half of the volume of the engine cylinder (maximum volume when the piston is as bottom dead center, namely, the size of the combustion chamber). However, in the practice of the invention, the valve assembly can be provided with some other amount of volume in the holding tank, depending on how the designer of the engine wants to affect operation of the engine. For example, the volume of the holding tank might have any volume within a range of approximately ten percent to ninety percent of the combustion chamber volume for a gasoline engine, and within a range of approximately three percent to fifty percent of the combustion chamber volume for a diesel engine.

In accordance with an important feature of the invention, the overall physical size of the engine is reduced by reducing the overall volume of the totality of holding tanks disposed within a single cylinder head, as in the case of a straight four-cylinder engine, or disposed within a plurality of cylinder heads, as in the case of a V8 configuration of engine. The reduction in the overall volume of the totality of the holding tanks is accomplished by sharing a single one of the holding tanks with a plurality of engine cylinders. The height of the engine can be reduced by building the holding tank(s) in a pancake shape wherein a tank extends transversely of the cylinder block with a relatively small dimension in terms of the height of the tank(s). It is recognized that, as a practical matter, a holding tank may have an irregular shape to conform to the layout of other components (such as valve stems, oil passages, and coolant passages, by way of example) in a particular construction of engine.

In such a sharing arrangement, the discharge valve is closed when any one of the return valves, associated with the sharing cylinders, is open; and furthermore, only one of the return valves, associated with the sharing cylinders, is open at any one time. In a preferred embodiment of the invention, two cylinders share one holding tank.

The sharing of the holding tank is demonstrated by the following example. In the case of an in-line four-cylinder engine, wherein the four cylinders share a common cylinder head, and wherein their respective pistons operate in the four-stroke engine cycle, the four cylinders are arranged in two groups each having two cylinders. The two cylinders in a first of the two groups share a first of two holding tanks, and the two cylinders in the second of the two groups of cylinders share a second of the two holding tanks. In each group of the two cylinders, two of the pistons translate within their respective cylinders in unison such that both the first and the second pistons are moving within their respective cylinders towards the cylinder head concurrently. In this configuration of the engine, the operation of a second piston is delayed from the operation of the first piston by one half of the four-stroke cycle, the delay being equivalent to 360 degrees of crankshaft rotation.

In such an engine, with respect to the operation of each of the two cylinder groups, the compression stroke of the first piston occurs concurrently with the exhaust stroke of the second piston. This embodiment of the invention enables the two cylinders to share a single holding tank located within their common cylinder head because the return valve associated with the first of the two pistons is open (during a portion of the compression stroke) when the return valve associated with the second of the two pistons is closed (during the exhaust stroke). The discharge valve, located at an exit of the common holding tank, has the opportunity to open during a portion of the intake stroke of either one of the two cylinders, this corresponding to the time of occurrence of the expansion (power) stroke in the other of the two cylinders. In this way, the operation of the first cylinder with its first piston and the common holding tank can take place without interference from the operation of the second cylinder with its second piston and the common holding tank.

Furthermore, in the foregoing engine, with respect to the outputting of gas from each of the holding tanks to the return manifold, it is noted that the movements of the pistons in the second of the cylinder groups is delayed from the piston movement of the first cylinder group by one quarter of the four-stroke cycle. As a result, the operations of the two discharge valves associated respectively with the two holding tanks are staggered, such the one discharge valve is open only during a period of time when the other discharge valve is closed. This provides for a uniform pattern in the flow gasses from the two holding tanks into the return manifold for enhanced operation of the engine.

### BRIEF DESCRIPTION OF THE DRAWING

The aforementioned aspects and other features of the invention are explained in the following description, taken in connection with the accompanying drawing figures wherein:
Fig. 1 shows a stylized view of an internal combustion engine constructed in accordance with the invention;
Fig. 2 is a timing diagram showing operation of valves and a piston associated with a cylinder of the engine of Fig. 1;
Fig. 3 shows diagrammatically details in the construction of a return manifold connected to a cylinder of the engine of Fig. 1, the figure showing also the inventive feature of a sharing of a holding tank by plural cylinders of the engine;
Fig. 4 is a is a sectional view of a cylinder head with a valve assembly including some of the components of Fig. 3, and further showing an arrangement of return valve, discharge valve, and holding tank constructed within the housing of the valve assembly, and showing further a connection of the holding tank to a neighboring cylinder; and
Fig. 5 is a longitudinal sectional view of a four-cylinder, inline engine block, wherein the two central cylinders share a single holding tank operated with a single discharge valve, and the two outer cylinders share a separate holding tank operated with a single discharge valve.

Identically labeled elements appearing in different ones of the figures refer to the same element but may not be referenced in the description for all figures.

### DETAILED DESCRIPTION OF THE INVENTION

A form of the internal combustion engine, generally used for powering automobiles, operates in accordance with the Otto cycle, and may be referred to herein as a gasoline engine, as distinguished from a diesel engine. The gasoline engine employs one or more cylinders, each cylinder having a piston movable therein with reciprocating motion for the driving of a crankshaft of the engine. Output power of the engine, for the driving of a load, is obtained from the rotating crankshaft. The invention is described now for the four-stroke form of the gasoline engine, and of the diesel engine, the construction of such engines having been described above.

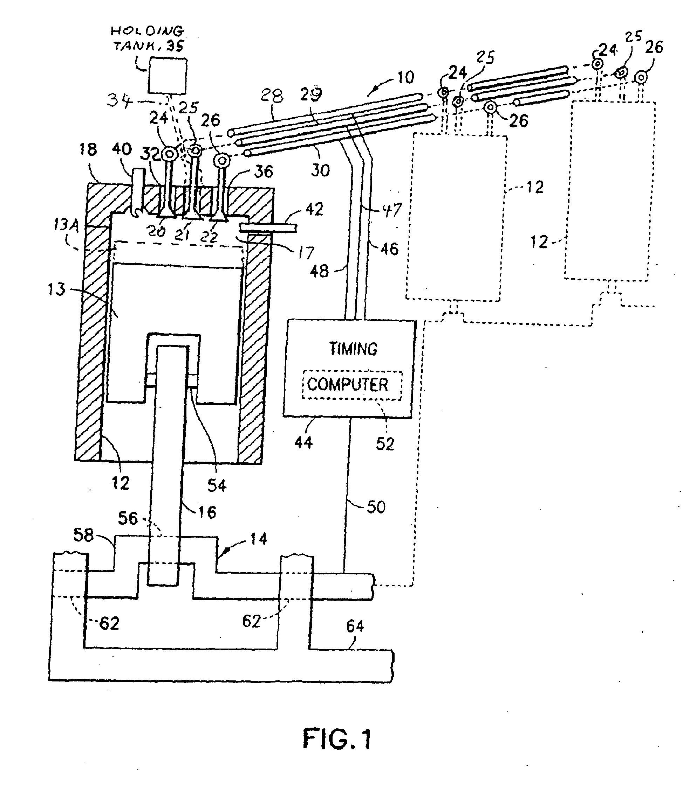

Fig. 1 shows an engine 10 having a plurality of cylinders 12 with pistons 13 therein. One of the cylinders 12 is sectioned to show its piston 13, and the remaining cylinders 12 are shown in phantom view. With respect to an individual one of the cylinders 12, the piston 13 is driven by a crankshaft 14 of the engine 10, and connects by a connecting rod 16 with the crankshaft 14 for reciprocating motion of the piston 13 along an axis of the cylinder during rotation of the crankshaft 14. Motion of the piston 13 is characterized by a repeating sequence of four strokes, as described above. The piston 13 and the cylinder 12 define a combustion chamber 17 which extends within the cylinder 12 from a top surface of the piston 13 to the interior surface of a head 18 of the cylinder 12. During the induction stroke and during the power (or expansion) stroke, the distance between the piston 13 and the head 18 of the cylinder 12 increases to provide for an increase in the volume of cylinder available for containing gases within the cylinder. During the compression stroke and during the exhaust stroke, the distance between the piston 13 and the head 18 decreases to provide for a decrease in the volume of the cylinder available for the containment of gases within the cylinder. Typically, in the construction of the cylinder head 18, the interior of the head 18 may be provided with a complex shape to enhance combustion within the cylinder 12; however, for an understanding of the present invention, the interior of the cylinder head 18 may be represented by the more simple shape of a right circular cylinder as shown in Fig. 1.

The engine 10 further comprises an intake valve 20, a return valve 21 and an exhaust valve 22 located in the cylinder head 18, these three valves being present in both the gasoline and the diesel forms of the engine 10. The valves 20, 21 and 22 are operated, respectively, by cams 24, 25 and 26 of camshafts 28, 29 and 30. It is understood that the three camshafts are provided by way of example, and that, by way of further example, a single camshaft with three cams thereon may be employed (as will be described hereinafter) for operation of the foregoing valves. The intake valve 20 is operative to close and to open an intake port 32 of the head 18. The return valve 21 is operative to close and to open a return port 34 of the head 18 wherein the return port 34 provides communication between the combustion chamber 17 and a holding tank 35. The exhaust valve 22 is operative to close and to open an exhaust port 36 of the head 18. Also shown in Fig. 1 is a spark plug 40 for ignition of gases in the cylinder 12 in the case of the gasoline engine and, as an alternative form of construction, Fig. 1 also shows a fuel injector 42 for injecting fuel into the heated air of the cylinder 12 at the beginning of the power stroke for the case of the diesel engine.

The engine 10 also includes a timing device 44 for synchronizing rotation of the crankshaft 14 with rotations of the camshafts 28, 29 and 30. Lines 46, 47 and 48 represent, respectively, connections of the timing device 44 to the camshafts 28, 29 and 30. Line 50 represents connection of the timing device 44 to the crankshaft 14. In the practice of the invention, the driving of the valves 20, 21 and 22 may be accomplished by well-known mechanical, hydraulic or electromagnetic apparatus synchronized to the crankshaft 14, which apparatus is represented diagrammatically by the camshafts 28, 29 and 30, and the timing device 44. By way of example, in the case of a mechanical driving of the valves 20, 21 and 22, the timing device 44 with its connecting lines 46, 47, 48 and 50 may be provided by means of gearing and a timing belt (not shown) which interconnects gears on the crankshaft 14 and on the camshafts 28, 29 and 30 to provide desired rates of rotation and timing of the rotations of the camshafts 28, 29 and 30 relative to the rotation of the crankshaft 14.

By way of further example, in the case of an electromagnetic driving of the valves 20, 21 and 22, the timing device 44 may be provided with a computer 52, the line 50 represents a shaft angle encoder providing instantaneous values of the angle of the crankshaft 14 to the computer 52, and the lines 46, 47 and 48 represent electric motors for rotating the camshafts 28, 29 and 30 in response to drive signals provided by the computer 52. The computer 52 may include a read-only memory (not shown) storing optimum camshaft angles for opening and closing both the intake valve 20, the return valve 21 and the exhaust valve 22 as a function of various engine operating conditions such as crankshaft angle and rate of rotation, as well as possibly intake air mass flow rate and accelerator pedal position, by way of example. Based on data stored in the computer memory as well as data provided to the computer 52 by engine sensors, as are well-known, the computer 52 outputs the drive signals to the electric motors for rotating the camshafts 28, 29 and 30, thereby to operate the valves 20, 21 and 22 at the optimum times, respectively, for accomplishing the induction function, the holding-tank function, and the exhaust function. Information stored in the memory of the computer 52, with respect to the optimum timing of each of the valves 20, 21 and 22, may be obtained by experimentation.

Connection of the piston 13 to the connecting rod 16 is made by way of a pin 54 that enables the connecting rod 16 to pivot relative to the piston 13. The opposite end of the connecting rod 16 connects with the crankshaft 14 via a journal 56 located in a crank arm 58 of the crankshaft 14, the journal 56 permitting the crankshaft 14 to rotate about its axis relative to the connecting rod 16. The crankshaft 14 is supported by a set of bearings 62, two of which are shown in Fig. 1, located in a housing 64 of the engine 10. The bearings 62 enable the crankshaft 14 to rotate relative to the housing 64.

It is advantageous to change the geometry of the piston 13 relative to the cylinder 12 by increasing the length of the piston 13 to provide for a taller piston 13A as indicated in dashed line. By way of example in the construction of the piston 13, 13A within its cylinder 12, in the case of a gasoline engine operating with the four-stroke process, when the piston in the cylinder is at top dead center, there is 1 cm (centimeter) between piston-top and the head. If the length of a stroke is 7 cm, then bottom dead center is 8 cm from piston to head, this resulting in a compression stroke with 8:1 compression ratio and a power stroke expansion ratio of 8:1. The diesel engine four-stroke cycle differs from this pattern only by having a higher compression ratio and a correspondingly higher expansion ratio.

Now, continuing with this example to show a preferred embodiment of the invention, the piston 13A is made to be 0.5 cm taller than the piston 13. This changes the geometric ratios from a ratio of 8 cm to 1 cm, with corresponding compression and expansion ratios of 8:1, to a ratio of 7.5 cm to 0.5 cm with a corresponding expansion ratio of 15:1 in the power stroke. The invention prevents the compression ratio of the compression stroke from rising above 8:1 by use of the return valve 21 which releases some of the gases (or vapor) from the cylinder 12 to the holding tank 35 during the beginning of the compression stroke. The result is that the compression stroke retains its compression ratio of approximately 8:1 (assuming that the return valve closes when the piston position is half way through the compression stroke, and that the interior volume of the holding tank 35 is equal to one-half of the interior volume of the cylinder 12 when the piston 13A is at bottom dead center, as will be described hereinafter) while the expansion stroke has the aforementioned expansion ratio of 15:1. By this usage of different ratios of the compression and the expansion strokes, the invention may be said to change the engine's operational aspect ratio of expansion ratio to compression ratio from today's regular industrial standard of 1:1 to an elevated level of about 2:1 in gasoline engines.

In the case of the diesel engine, wherein the elevated temperature produced by the relatively high compression of the air is responsible for ignition of the fuel, the improvement in the aspect ratio in diesel engines may be less that 2:1. However in the cases of both the gasoline engine and the diesel engine, the invention results in an "elevated" aspect ratio of greater than 1:1.

In operation, the return valve 21 is opened, at the commencement of the compression stroke, to provide for communication between the interior space of the cylinder 12 and the interior space of the holding tank 35. Then, during the compression stroke, as the piston 13A advances towards the head 18, the piston 13A pushes gases from the cylinder 12 via the return port 34 into the holding tank 35. Pressure of the gases builds up in both the interior space of the cylinder 12 and in the interior space of the holding tank 35.

In the preferred embodiment of the invention, the interior volume of the holding tank 35 is equal to one-half of the interior volume of the cylinder 12 when the piston 13A is at bottom dead center. When the piston 13A advances to a position half way toward the cylinder head 18, the volume of the cylinder located between the piston and the head is equal to the volume of the holding tank 35. Then, half of the gases originally present in the cylinder 12 has been moved to the holding tank 35. In the operation of the compression stroke, as the piston 13A passes the halfway point, the return valve 21 closes to prevent further egress of the gases from the cylinder 12. Since the piston 13A of the modified engine is taller than the piston 13 of the unmodified engine (as described above in Fig. 1), the removal of the foregoing quantity of engine gases from the cylinder 12 into the holding tank 35 compensates for the greater height of the piston 13A so as to produce, at the end of the compression stroke, a pressure and temperature in the cylinder gases which is substantially the same as that which is found in the operation of the unmodified engine.

By way of review of the preferred embodiment of the invention, it is noted that the modification of the engine 10, with respect to the piston height, considers the situation wherein the piston is at top dead center, and the piston height is raised sufficiently so as to halve the cylinder space with the piston at top dead center. Reducing the volume of the compressed gas by a factor of two raises the pressure and temperature of the gas well above the values of pressure and temperature found in the unmodified engine. The removal of half of the engine gases by means of the holding tank 35 restores the values of pressure and temperature to those of the unmodified engine.

However, for alternative embodiments of the invention, it is recognized that one may wish to lower the pressure and temperature of the compression stroke in the modified engine to values below that found in the unmodified engine so as to be able, by way of example, to operate the modified engine with a lower octane fuel. This can be accomplished, in accordance with the invention, by enlarging the holding tank 35 to remove more than 50 percent of the engine gases, for example, to remove 60 percent of the engine gases. Alternatively, if the engine had been operating on low octane fuel, and it is desired to operate the modified engine on higher octane fuel, then one would reduce the size of the holding tank 35 to remove less than 50 percent of the engine gases, possibly to remove only 45 percent of the engine gases.

It is also possible to alter the amount of the gases removed by the holding tank 35 by closing the return valve 21 earlier during the compression stroke; this reduces the amount of gases transferred from the cylinder 12 into the holding tank 35. Alternatively, one may delay the closing of the return valve 21 during the compression stroke, thereby increasing the amount of gases transferred from the cylinder 12 into the holding tank 35. In each of the foregoing cases, it is apparent that the invention has made it possible to transfer a precisely determined fraction of the cylinder gases into the holding tank 35, thereby to compensate for changes in the height of the piston as well as to accomplish further changes compensating for fuel octane.

By way of further example in the case of a diesel engine, wherein it is desired to alter the expansion ratio of the power stroke from a value of 16:1 to the value of 20:1, this can be accomplished with a relatively small change in the piston height, as compared to the changes disclosed above the reference to Fig. 1. It is recalled that, in the case of the embodiment of Fig. 1, the expansion ratio of the power stroke was changed from a value of 8:1 to a value of 15:1 by modification of the engine, while in the case of the present example of the diesel engine, a relatively small change in the expansion ratio of the power stroke is provided, namely, from the aforementioned value of 16:1 to the value of 20:1. In order to restore the values of temperature and pressure that were originally present in the compression stroke prior to the modification of the height of the piston, the holding tank 35 would be employed to remove a portion of the cylinder gases. However, the amount of the cylinder gases to be removed in this example of the diesel engine is smaller than that disclosed above with reference to the embodiment of Fig. 1. This is accomplished most readily by employing a holding tank 35 of smaller size, relative to the size of the cylinder, than the previously described size of the holding tank 35.

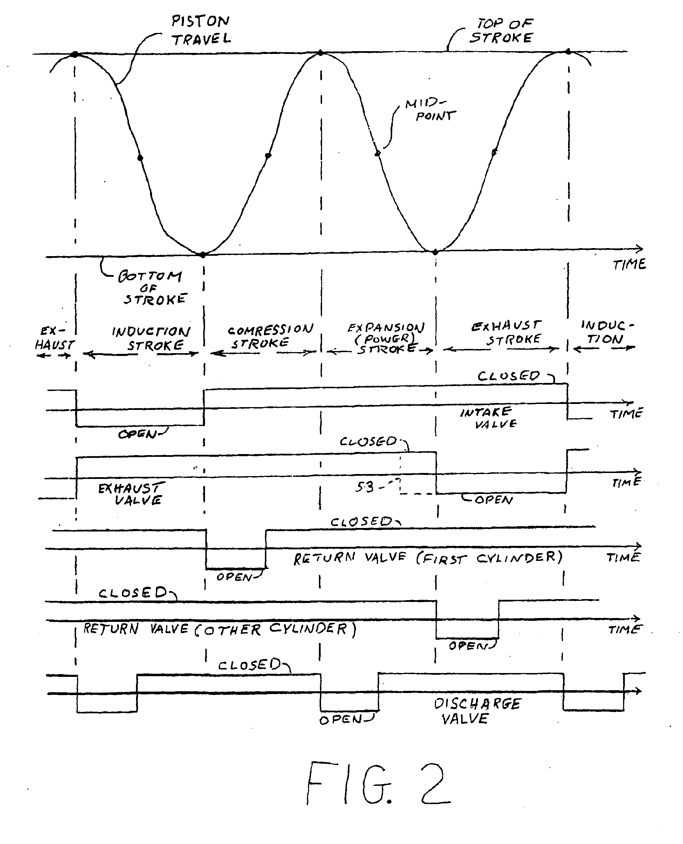

Fig. 2 presents a timing diagram, composed of six graphs showing the various strokes of the reciprocating motion of the piston within the cylinder, plus the open and the closed positions of various valves with reference to the piston travel. Horizontal axes represent the time, and the six graphs are in time registration with each other (indicated by dashed vertical lines). In a graph at the top of the diagram, the piston travel is shown as a sinusoidal movement between the top of the stroke and the bottom of the stroke, identified in the figure. The midpoint of a stroke is also identified. The strokes are identified as (1) the induction stroke, wherein the piston travels from the top dead center position, adjacent the cylinder head, to the bottom dead center position, (2) the compression stroke wherein the piston travels from the bottom dead center to the top dead center positions, this being followed by (3) the expansion (or power) stroke wherein the piston travels from the top dead center position to the bottom dead center position, and (4) the exhaust stroke wherein the piston travels from the bottom dead center position to the top dead center position. In the second graph, the intake valve is shown open during the induction stroke and closed during the other three strokes. In the third graph, the exhaust valve is shown open during the exhaust stroke and closed during the other three strokes. If desired, the exhaust valve may be opened earlier, during a terminal portion of the power stroke as is described in Robinson, US patent 7,040,264, as indicated in the timing diagram by a dashed line 53.

The fourth, fifth and sixth graphs of Fig. 2 relate to the inventive feature of the sharing of a holding tank by more than one cylinder. In the case of two cylinders sharing a common holding tank, as will be described later in further detail, the operation of the piston and the valves of the second cylinder is delayed relative to the operation of the piston and the valves of the first cylinder. This delay results in openings of the respective return valves, which openings are staggered in time, and provides opportunities for openings of the discharge valve when both of the return valves are closed. Briefly, the fourth and the fifth graphs deal with the example of two cylinders sharing a single holding tank. The fourth graph shows the opening and the closing of the return valve between the holding tank and the first of the two cylinders, and the fifth graph shows the opening and the closing of the return valve between the same holding tank and the other of the two cylinders. The sixth graph shows the opening and the closing of the discharge valve between the holding tank and the return manifold.

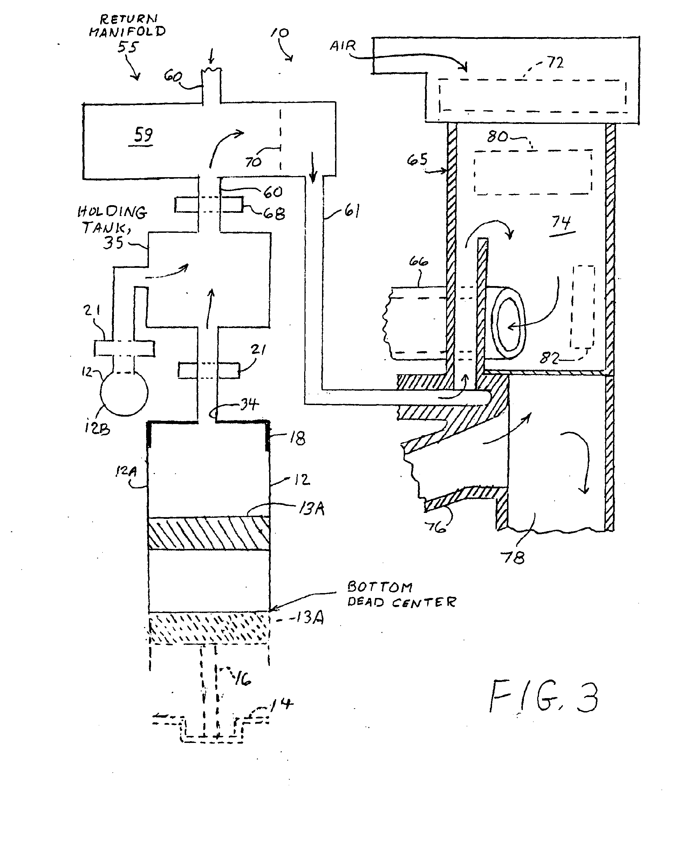

Fig. 3 shows two cylinders 12 of the engine 10 connected respectively via return valves 21 to a common holding tank 35, and further shows the connection of the two cylinders 12 via the holding tank 35 to a return manifold 55 of the engine 10. The two cylinders 12 are further identified as cylinders 12A and 12B to facilitate the description. The cylinder 12A is enlarged to present a simplified view of the cylinder and its connection with the return manifold 55. In the cylinder 12A, the piston 13A is being driven during a compression stroke from its position at bottom dead center towards the cylinder head 18, and is shown in Fig. 3 at the halfway point. The return manifold 55 comprises a central chamber 59 with a plurality of arms 60 extending from the central chamber 59 to respective ones of the cylinders 12 of the engine 10. An outlet passage 61 is provided on the central chamber 59 for directing return gases from the return manifold 55, in the case of the gasoline engine, to the housing 65 of a carburetor or fuel injection assembly, in which the return gases join the stream of the air-fuel mix heading toward an inlet of an intake manifold 66. Arrows show the direction of gas flow within the central chamber 59 and within the housing 65. An outlet of the holding tank 35 connects via a discharge valve 68 and an arm 60 into the central chamber 59. The foregoing description of the cylinder 12A applies also to the cylinder 12B and to other cylinders of the engine 10.

In the operation of the holding tank 35, prior to inception of the compression stroke in the cylinder 12A, the discharge valve 68 closes to prevent any flow of vapor or gases between the holding tank 35 and the central chamber 59. Also, as shown in Fig. 2, the return valve 21 associated with the cylinder 12B is closed. Then, return valve 21 of the cylinder 12A is opened, at the commencement of the compression stroke, to provide for communication between the interior space of the cylinder 12A and the interior space of the holding tank 35. During the compression stroke, as the piston 13A advances towards the head 18, the piston 13A pushes gases from the cylinder 12A via the return port 34 into the holding tank 35. Since these gases cannot escape from the holding tank 52, because of the closure of the discharge valve 68 and the closure of the return valve 21 of the cylinder 12B, pressure of the gases builds up in both the interior space of the cylinder 12 and in the interior space of the holding tank 52. With respect to the foregoing example of a preferred embodiment, wherein upon advancement of the piston 13A to a position half way toward the cylinder head 18, half of the gases originally present in the cylinder 12A has been moved to the holding tank 35. In the operation of the compression stroke, as the piston 13A passes the halfway point, the return valve 21 closes, as shown in Fig. 2, to prevent further egress of the gases from the cylinder 12A.

Preferably, the central chamber 59 of the return manifold 55 is provided with a mesh 70, as is described in the Robinson patent 6,907,859, wherein the mesh 70 extends across the chamber 59 at a location between the outlet passage 61 and the set of arms 60. By way of example, the mesh 70 may divide the internal space of the chamber 59 into two equal portions. The mesh 70, which may be constructed as a wire screen with apertures therein, functions as an acoustic baffle, as does a corresponding structure in a muffler, to reduce pulsations in the speed and pressure of gases applied to the central chamber 59 by respective ones of the arms 60. In terms of an electrical-circuit analogy to the operation of the return manifold 55, gas, escaping from a holding tank 35 by its corresponding discharge valve 68 into the central chamber 59, experiences a certain amount of resistance to the flow of the gas through the discharge valve 68, depending on the interior dimensions of the discharge valve 68.

The central chamber 59 has a substantially larger interior volume than does any one of the holding tanks 35. The volume of the central chamber 59 is sufficiently large to store the quantities of gas expelled from a plurality of the holding tanks 35, just as a capacitor of an electrical low-pass filter is able to store the charge from a pulsating current to provide a relatively small ripple in a value of voltage. The mesh 70, by introduction of resistance to the flow of gases across the chamber 59, may be viewed, in terms of the analogous electrical circuit, as dividing the chamber 59 into two sections, each of which may be regarded as a capacitor of the foregoing low-pass filter, with the two capacitors coupled via an electrical resistor that represents the mesh 70. The outlet passage 61 also introduces an amount of resistance to the flow of the return gas, depending on the interior dimensions of the outlet passage 50. Accordingly, the return manifold 55 is operative to reduce pulsations of returned gases from the respective cylinders 12 to a steady stream of gas, ready to be combined with the air-fuel mixture of a carburetor or fuel injection assembly of the engine, in the case of the gasoline engine, or with air from the source of compressed air, in the case of the diesel engine.

Air enters the engine 10 at the top of the housing 65, and passes via an air cleaner 72 into a central passage 74 of the housing 65. The intake manifold 66 connects between the housing 65 and the intake valve 20 of each of the respective cylinders 12. The outlet passage 61 of the return manifold 55 extends along the interior of the housing 65 to combine a stream of the return air-fuel mix with an air-fuel mixture provided by the carburetor or by the fuel-injection assembly in the central passage 74 of the housing 65. The combined stream of air-fuel mix (in the case of a gasoline engine) or combined streams of air (in the case of a diesel engine) from the central passage 74 enter into the intake manifold 66 to feed the combustion within the cylinders 12. An exhaust manifold 76 connects between an exhaust pipe 78, at the base of the housing 65, and the exhaust valve 22 of each of the respective cylinders 12. The configuration of the housing 60 provides for a location at 80, indicated in phantom, for the venturi of a carburetor and, by way of alternative embodiment, provides for a location at 82, indicated in phantom, for a fuel injection assembly. Thereby, the engine 10 constructed in accordance with the invention is able to recirculate the portion of the air-fuel mixture, withdrawn from the cylinder via the return manifold, back to the cylinder via the intake manifold.

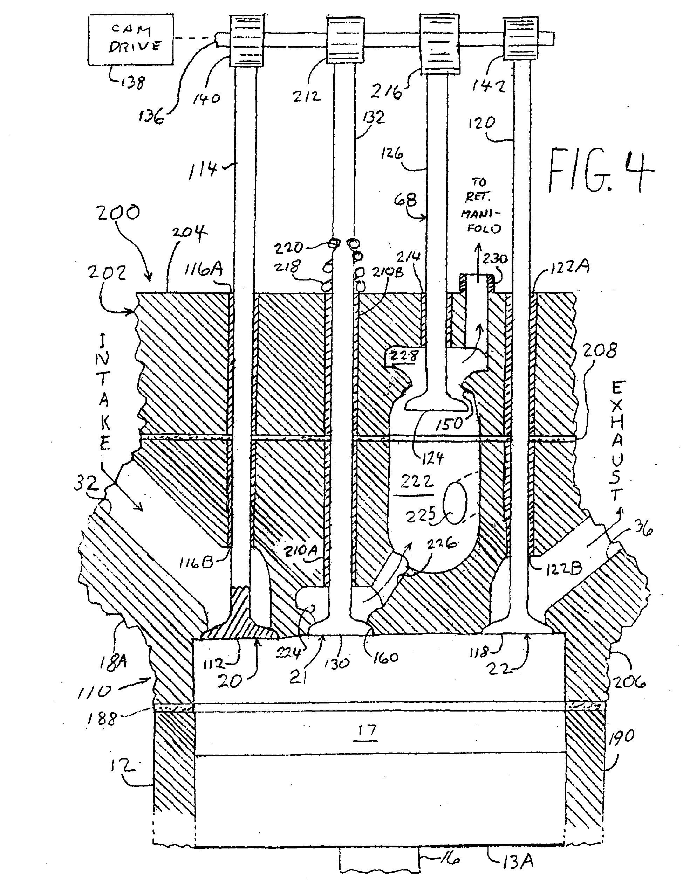

Fig. 4 shows a sectional view of an engine 110 having a construction similar to that of the engine 10 of Fig. 1, but having the valves arranged to be driven by a single camshaft, rather than the plural camshafts of the engine 10. In addition, the construction of the engine 110 includes the locating of a holding tank within the housing of a valve assembly located in the cylinder head of the engine. Furthermore, the construction of the engine 110 provides for the sharing of a holding tank among two cylinders of the engine, as described below.

The engine 110 has a cylinder head 18A with a valve assembly 200. A housing 202 of the valve assembly 200 is constructed of an upper section 204 and a lower section 206 which are connected via a gasket 208 located at an interface between the two housing sections 204 and 206. Some of the engine components shown in Fig. 4 are essentially the same as corresponding components shown in Fig. 1 and, for convenience, are identified by the same reference numerals in both of the drawing figures. The lower housing section 206 connects via a gasket 188 to a cylinder block 190, the cylinder block 190 including the cylinder 12 and the piston 13A (previously described with reference to Fig. 1) which, in conjunction with the lower housing section 206, define the combustion chamber 17.

The lower section 206 of the housing 202 includes the intake port 32 connecting with the combustion chamber 17 via the head 112 of the intake valve 20, and the exhaust port 36 connecting with the combustion chamber 17 via the head 118 of the exhaust valve 22. The stem 114 of the intake valve 20 extends via valve guides 116B and 116A, respectively, in the housing sections 206 and 204 to contact a cam 140 on a camshaft 136 driven by a drive 138. The stem 120 of the exhaust valve 22 extends via valve guides 122B and 122A, respectively, in the housing sections 206 and 204 to contact a cam 142 on the camshaft 136 driven by the drive 138.

The valve assembly 200 further comprises a return valve 21 with a stem 132 that extends via valve guides 210A and 210B, respectively, in the housing sections 206 and 204 to contact a cam 212 on the camshaft 136. A head 130 of the return valve 21 is positioned by the valve stem 132 against a valve seat 160 in the lower housing section 206 upon a closing of the return valve 21. The head 130 of the return valve 21 lifts off of the seat 160 during an opening of the return valve 21. Also included in the valve assembly 200 is a discharge valve 68 with a stem 126 that extends via a valve guide 214 in the upper housing section 204 to contact a cam 216 on the camshaft 136. A head 124 of the discharge valve 68 is positioned by the valve stem 126 against a valve seat 150 in the upper housing section 204 upon a closing of the discharge valve 68. The head 124 of the discharge valve 68 lifts off of the seat 150 during an opening of the discharge valve 68.

An exemplary valve retraction spring 218 is shown encircling the stem 132 of the return valve 21. The upper end of the spring 218 engages in a notch 220 which encircles the stem 132, and the lower end of the spring 218 pushes against the upper housing section 204 to urge the stem 132 towards the cam 212 to maintain contact with the cam 212, and to seat the valve 21 in its seat 160 upon rotation of the cam 212 to the valve-seating part of the camshaft cycle. Similar arrangements of retraction springs (not shown in Fig. 4) may be provided for respective ones of the valve stems 114, 120 and 126 for maintaining contact between these valve shafts and their respective cams 140, 142 and 216, and for seating the corresponding valve heads 112, 118 and 124 in their seats when the valves are to be closed.

In accordance with a feature of the invention, the valve assembly 200 is provided with a holding tank 222 that is located at the interface of the upper housing section 204 with the lower housing section 206, such that a portion of the holding tank 222 is located in the upper housing section 204, and a further portion is located in the lower housing section 206. The holding tank 222 is shared by the cylinder 12 (shown in Fig. 4) as well as with a further cylinder 12 (not shown in Fig. 4) that is coupled to the holding tank 222 by a passage 225 formed within the lower housing section 206. The head 124 of the discharge valve 68 is portrayed in Fig. 4 as being located in an upper portion of the tank 222 (within the space of the upper housing section 204, above the gasket 208) in an open state of the discharge valve 68, wherein the valve head 124 is lifted away from the discharge valve seat 150. During assembly of the valve assembly 200, prior to attachment of the upper housing section 204 to the lower housing section 206, the discharge-valve stem 126 is positioned in the valve guide 214 with the discharge-valve head 124 located in the upper portion of the holding tank 222. Thereafter, a valve retraction spring is attached to the discharge-valve stem 126 to hold the valve head 124 within the upper portion of the holding tank 222. Then the upper housing section 204 can be attached to the lower housing section 206 with the gasket 208 located between the two housing sections 204 and 206, thereby to complete formation of the housing 202. Thereupon, the intake-valve stem 114, the exhaust-valve stem 120 and the return-valve stem 132 are inserted through their respective valve guides and secured by their respective retraction springs to the housing 202.

In the operation of the engine 110, during the compression stroke, when the return valve 21 is open, the gases driven out of the combustion chamber 17 by the rising piston 13A pass by the return-valve head 130 into an entry port 224, located behind the valve head 130. The entry port 224 is located off to the side of, and below the holding tank 222 so as to enable a positioning of the return-valve stem 132 outside of the holding tank 222. The entry port 224, along with a passage 226 that connects the entry port 224 to the bottom of the holding tank 222, serve as an entrance to the holding tank 222, via which entrance, the engine gases pass from the combustion chamber 17 to the holding tank 222. In similar fashion, the passage 225 serves as an entrance to the holding tank 222, via which entrance, the engine gases pass from the combustion chamber 17 of the further cylinder (not shown in Fig.4, but which shares the holding tank) to the holding tank 222. During the portion of the operating cycle of the camshaft 136, during which the return valve 21 is open for passage of the engine gases into the holding tank 222, the discharge valve 68 is closed, as has been described above with reference to Fig. 2. At a subsequent interval in the operating cycle of the camshaft 136, when the return valve 21 is closed, the discharge valve 68 opens to allow egress of the engine gases from the holding tank 222 via a discharge port 228, located behind the discharge-valve head 124, into a conduit 230 that leads to the central chamber 59 (Fig. 3) of the return manifold 55. Thus the discharge port 228 and the conduit 230 serve as an exit of the holding tank 222, via which exit, the engine gases pass from the holding tank 222 into the central chamber 59 of the return manifold 55.

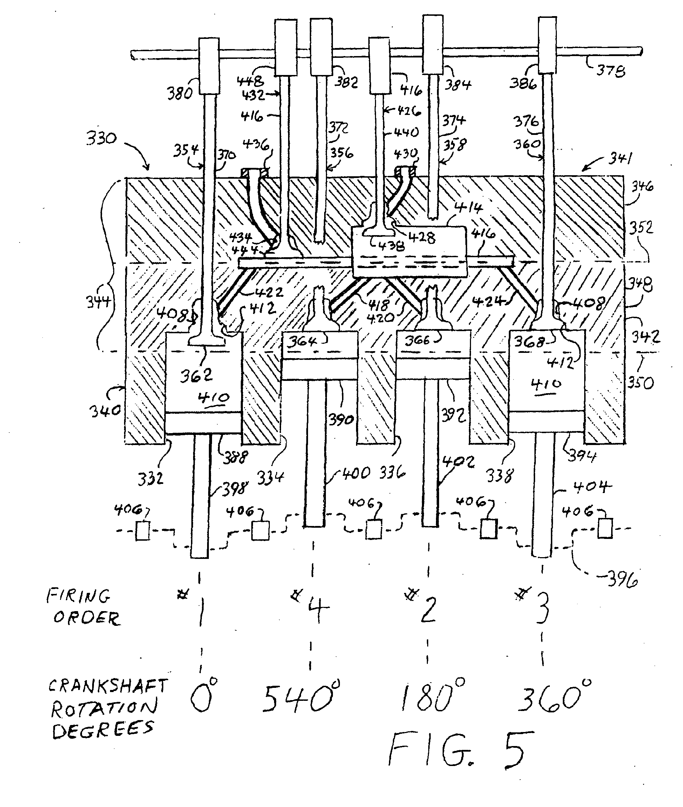

Fig. 5 shows a construction of the invention in an inline, four-cylinder engine 130 with two of the four cylinders sharing a first of two holding tanks, and with the remaining two of the four cylinders sharing a second of the two holding tanks. In addition, in this engine, a holding tank is constructed with a relatively large transverse dimension and a relatively small vertical dimension to facilitate emplacement of the engine in a front engine compartment of an automobile without impairing forward vision of a driver of the automobile.

The feature of sharing holding tanks is accomplished in this form of four-stroke engine wherein the timing of the piston strokes of the respective cylinders provides for two of the four pistons that are moving in their respective two cylinders towards their common cylinder head concurrently, but wherein the operation of the remaining two pistons in their respective two cylinders is delayed from the operation of the first of the two pistons by one half of the four stroke cycle. As an example of such a configuration of an engine, with each of the foregoing pairs of cylinders, the intake stroke for the first cylinder occurs concurrently with the power stroke of the second cylinder. In corresponding fashion, the compression stroke and the opening of the return valve in the first cylinder occur concurrently with the exhaust stroke in the second cylinder. This is understood from the fourth and the fifth graphs of Fig. 2, which show a staggered operation of the return valves in the pair of cylinders, such that their operations are delayed from each other by one-half of the four-stroke cycle. While this operational principle is readily demonstrated for the case of a single bank of four cylinders with their respective pistons connected to a common crankshaft, it is to be understood that the principles of operation of the invention apply to more complex engines, such as an engine having two banks of four cylinders, and possibly even an engine with an odd number of cylinders wherein some cylinders share a holding tank, and one of the cylinders operates with a holding tank that is not shared.

The operational principle of the engine is demonstrated further, with reference to the sixth graph of Fig. 2, wherein the above staggered operation of the piston strokes in each pair of the cylinders presents opportunities for opening the discharge valve. Upon inspection of the fourth, fifth and sixth graphs, it is observed that the discharge valve opens after a closure of one of the return valves, but before an opening of the other of the two return valves. Thus, in the operation of any one of the holding tanks, there are times when all three of its valves (the two return valves and the single discharge valve) are closed, and furthermore, there is the restriction on the operation of the three valves that only one of the valves can be open at any instant of time. This restriction on the opening of the valves associated with a single holding tank insures that, upon the opening of a return valve connecting the tank with a cylinder, that cylinder sees a tank with a predetermined volume, the amount of the volume being certain because all of the other valve passages to the tank are closed. This demonstrates that in the sharing of the holding tank by both the first and the second cylinders of the cylinder pair, the operation of the second cylinder does not interfere with the operation of the first cylinder. Conversely, the operation of the first cylinder does not interfere with the operation of the second cylinder.

In Fig. 5, the engine 330 has four cylinders 332, 334, 336 and 338 arranged within a cylinder block 340, and an adjoining cylinder head 341 having a valve assembly 342 disposed within a housing 344 composed of an upper section 346 and a lower section 348. The valve-assembly housing 344 is secured to the upper surface of the cylinder block 340 with a gasket 350 located along an interface between the cylinder head 341 and the cylinder block 340. In the housing 344, the upper section 346 is secured to the lower section 348 with a gasket 352 located along an interface between the upper section 346 and the lower section 348. The valve assembly 342 provides a separate set of intake valve, exhaust valve and return valve, as well as a spark plug (for a gasoline engine) or fuel injector (for a Diesel engine) for each of the cylinders 332, 334, 336 and 338; however, in order to simplify the drawing, there are shown only the return valves 354, 356, 358 and 360 respectively for the cylinders 332, 334, 336 and 338. The operations of the intake and exhaust valves as well as the operations of the spark plugs and fuel injectors has been explained above, which explanation applies also to the engine 330, so that explanation of the operation of the engine 330 is accomplished more readily by reference only to the return valves 354, 356, 358 and 360.

Each of the return valves 354, 356, 358 and 360 comprises respectively a valve head 362, 364, 366 and 368, and further comprises respectively a valve stem 370, 372, 374 and 376. The return valves 354, 356, 358 and 360 are driven by a camshaft 378 having four cams 380, 382, 384 and 386 making contact respectively with the valve stems 370, 372, 374 and 376. The engine 330 further comprises four pistons 388, 390, 392 and 394 located respectively in the cylinders 332, 334, 336 and 338, and a crankshaft 396 driven by the pistons 388, 390, 392 and 394, the pistons 388, 390, 392 and 394 being connected respectively by connecting rods 398, 400, 402 and 404 to the crankshaft 396. The crankshaft 396 is supported by bearings 406.

Upon rotation of the crankshaft 396, the pistons 388, 390, 392 and 394 move with translatory motion along their respective cylinders 332, 334, 336 and 338 towards and away from the cylinder head 341. Rotation of the camshaft 378 is at a rate of one revolution within one four-stroke interval of the engine 330, and is synchronized with rotation of the crankshaft 396 that rotates at a rate of two revolutions within one four-stroke interval of the engine 330. Synchronization of the camshaft 378 with the crankshaft 396 may be accomplished by a timing device, such as the timing device 44 of Fig. 1 (not shown in Fig. 5). Upon rotation of the camshaft 378, the return valves 354, 356, 358 and 360 move with translatory motion along their respective valve stems 370, 372, 374 and 376 towards and away from the camshaft 378.

Included within the cylinder head 341 is a set of return ports 408, wherein one return port 408 is provided at the top of each cylinder 332, 334, 336 and 338 for receiving a respective one of the valve heads 362, 364, 366 and 368. Each of the return ports 408 opens into the combustion chamber 410 of the respective cylinder 332, 334, 336 and 338, and has a valve seat 412, at the location wherein the return port opens into the combustion chamber, for receiving the respective valve head 362, 364, 366 and 368 upon retraction of the valve head by the camshaft 378. Retraction of a return valve by the camshaft results in a closure of the corresponding return port 408 and a cessation of communication between the return port 408 and the combustion chamber 410. Advancement of a return valve, away from its return port 408, by the camshaft 378 results in an opening of the corresponding return port 408 for communication with the combustion chamber 410.

In accordance with the invention, a reduced number of holding tanks, namely, two holding tanks 414 and 416, for operation with the four cylinders 332, 334, 336 and 338 in the example provided by Fig. 5, are located in the cylinder head 341. The locations of the holding tanks 414 and 416 are provided at the gasket 352 so that a portion of each of the tanks 414 and 416 extends into the upper housing section 346, and a further portion extends also into the lower housing section 348. This arrangement of the tanks 414 and 416 facilitates construction of the tanks by reducing the amount of milling required in each of the housing sections 346 and 348. A portion of the valve stem 372 and a portion of the valve stem 374 are cut away in Fig. 5 to show the holding tanks. Passages 418 and 420 are formed within the lower housing section 348 to connect the holding tank 414 with the return ports 408 respectively of the cylinders 334 and 336. Passages 422 and 424 are formed within the lower housing section 348 to connect the holding tank 416 with the return ports 408 respectively of the cylinders 332 and 338. The passages 418, 420, 422 and 424 are shown in Fig. 5 as being straight to facilitate construction of these passages by a milling operation, it being understood that these passages may be provided with a curved configuration if desired, in which case construction may be performed by a molding process.

The holding tank 414 is provided with a discharge valve 426 disposed in a discharge port 428 of the tank 414. An opening of the discharge valve 426 connects the holding tank 414 via a conduit 430 to a return manifold (not shown in Fig. 5) such as the return manifold 55 of Fig. 3. The holding tank 416 is provided with a discharge valve 432 disposed in a discharge port 434 of the tank 416. An opening of the discharge valve 432 connects the holding tank 416 via a conduit 436 to a return manifold (not shown in Fig. 5) such as the return manifold 55 of Fig. 3. The discharge valve 426 has a valve head 438 and a valve stem 440, the valve stem 440 positioning the head 438 within the discharge port 428 and being pressed by a spring (not shown) against a cam 442 carried on the camshaft 378. The discharge valve 432 has a valve head 444 and a valve stem 446, the valve stem 446 positioning the head 444 within the discharge port 434 and being pressed by a spring (not shown) against a cam 448 carried on the camshaft 378. Upon rotation of the camshaft 378, the cam 442 drives the valve stem 440 for opening and closing the discharge valve 426, and the cam 448 drives the valve stem 446 for opening and closing the discharge valve 432. An opening of the discharge valve 426, 432 is characterized by a downward movement of the valve head 438, 444 into the holding tank 414, 416 respectively, and an upward movement of the head 438, 444 provides for a closing of the respective discharge valve 426, 432.

The shape of a holding tank is determined by the location of the tank with reference to the positions of other elements in the cylinder head 341, subject to the condition that the volume of the holding tank is related to the volume of a combustion chamber as has been explained above. When calculating the volume of a holding tank, such as the tank 414, it is necessary to include the volume of the passages, such as the passages 418 and 420, connecting the tank to the return ports 408 because these passages serve to store engine gasses as does the holding tank. The capacity for providing different shapes to individual ones of the holding tanks disposed within the cylinder head 341 facilitates arrangement of the components of the cylinder head 341, and thereby aids in reducing the complexity of the construction of the engine 330.

Fig. 5 demonstrates the capacity for providing different shapes to individual ones of the holding tanks, wherein the holding tank 414 is configured with an elongated rectangular shape, while the holding tank 416 is configured as a pancake extending a relatively short distance into each of the lower housing section 348 and the upper housing section 346. In the pancake shape, the holding tank has a relatively short dimension in a direction generally parallel to the axis of a cylinder, and has a relatively long dimension in a plane generally perpendicular to the cylinder axis. This shape of holding tank minimizes engine height to facilitate emplacement of the engine in the front engine compartment of an automobile, this being advantageous for reasons of styling and for driver visibility. Again, by way of further example, in the construction of the holding tanks, the holding tank 416 is shown passing behind the holding tank 414 in the view of the engine 330 presented in Fig. 5.

With reference to both Figs. 2 and 5, the first stroke of the four-stroke engine cycle is the induction stroke. The succession of the induction strokes in the respective cylinders follows the firing order, such that the induction stroke in the right middle cylinder occurs 180 degrees after the induction stroke in the left end cylinder. The second stroke of the four-stroke engine cycle is the compression stroke. Similarly to the succession of induction strokes, the succession of the compression strokes in the respective cylinders follows the firing order, such that the compression stroke in the right middle cylinder occurs 180 degrees after the compression stroke in the left end cylinder. By extension of this reasoning, it is apparent that the history of the four-stroke operation in each of the cylinders is delayed from the operation in some other cylinder by 180 degrees, 360 degrees, or 540 degrees depending on the positions of the cylinders in the firing order. As described above with reference to the graphs of Fig. 2, the invention is practiced with the sharing of a holding tank by two cylinders for which the respective operations are delayed from each other by 360 degrees of crankshaft rotation. This places the active interval (wherein there is a transfer of gas between tank and cylinder) for one of the cylinders in the inactive interval (wherein there is no transfer of gas between tank and cylinder) of the other of the two cylinders. Thereby, as has been noted above, each of the two cylinders can act with the holding tank without interference from the other of the two cylinders.

With respect to the operation of the engine 330, the linear arrangement of the four pistons 388, 390, 392 and 394 along the crankshaft 396 synchronizes the movements of the four pistons such that the two end pistons 388 and 394 are in phase, and the two middle pistons 390 and 392 are in phase. The middle pistons 390 and 392 are 380 degrees out of phase with the end pistons 388 and 394 such when the two middle pistons are at top dead center (as shown in Fig. 5), the two end pistons are at bottom dead center (as shown in Fig. 5). Implementation of the four-stroke cycle operation is obtained by ignition of the fuel-air mixture in successive ones of the cylinders in a prescribed order, such that each ignition occurs 180 degrees of crankshaft rotation after the previous ignition in the sequence of ignitions. In this sense, the rotating crankshaft can be regarded as setting the timing of the operations in all of the cylinders. The order of the ignitions in the respective cylinders may be referred to as the firing order, and is indicated in Fig. 5 by the sequence of numbers located beneath the engine. The firing order is shown as the first ignition in the cylinder 332 (left end cylinder), the second ignition in the cylinder 336 (right middle cylinder), the third ignition in the cylinder 338 (right end cylinder), and the fourth ignition in the cylinder 334 (left middle cylinder). This is followed by a repetition of the firing order, such that the fifth ignition is in the cylinder 332. With reference to the angle of rotation of the crankshaft 396, if the first ignition takes place at an arbitrary phase angle considered to be at a reference angle of zero degrees, the next ignition takes place at a crankshaft phase angle of 180 degrees, the third ignition takes place at a crankshaft phase angle of 360 degrees, and the fourth ignition takes place at a crankshaft phase angle of 540 degrees. These angles are shown at the bottom of Fig. 5 in registration with numbers designating the firing order. In corresponding fashion, the cams 442 and 448 for operation of the discharge valves 426 and 432 (respectively for the holding tanks 414 and 416) are arranged on the camshaft 378 to open their respective discharge valves at such times when there associated return valves are closed, this being in correspondence with the last three graphs of Fig. 2.

As shown in Fig. 5, with respect to the holding tank 414, the return valves 356 and 358 are closed, and the discharge valve 426 is open, this being in accord with the restriction in the valving that only one of the valves associated with the holding tank 414 can be open at any one time. With respect to the holding tank 416, the return valve 360 and the discharge valve 432 are closed, and the return valve 354 is open, this being in accord with the restriction in the valving that only one of the valves associated with the holding tank 416 can be open at any one time. In particular, it is noted that, with respect to the two discharge valves 426 and 432 portrayed in Fig. 5, one of the discharge valves is open and the other of the discharge valves is closed. While both discharge valves may be closed at the same time, they cannot be open at the same time in an engine such as the engine 330 because of the relative timing among the stroking of the respective pistons.

The alternate opening of the two discharge valves 426 and 432 arises by virtue of a delay of one-quarter of the four-stroke cycle (180 degrees of rotation of the crankshaft 396) between the operation of a piston 388 or 394 associated with the holding tank 416 and the operation of either one of the pistons 390 or 392 associated with the other holding tank 414. This may be seen by inspection (in Fig. 5) of the piston positions corresponding to the firing order and the crankshaft rotation. Also, with reference to the bottom graph of Fig. 2, which portrays operation of the discharge valve for one of the holding tanks, the openings of the discharge valve are spaced apart in time by one half of the four-stroke cycle. This corresponds to 360 degrees of crankshaft rotation. However, in view of the above-noted delay of one-quarter of the four-stroke cycle between the operations of the pistons of one holding tank and the pistons of the other holding tank, it becomes apparent that an opening of the second discharge valve would occur during an interval when the first discharge valve is closed.

Thereby, in accordance with a feature of the invention, the operations of the first and the second discharge valves are staggered by the one-quarter cycle delay of the four-stroke cycle between the operation of a first plurality of cylinders associated with a first of the holding tanks and the operation of a second plurality of cylinders associated with a second of the holding tanks. The staggering of the operations provides that one of the discharge valves is open only during a period of time when the other of the discharge valves is closed. This results advantageously in improved uniformity in the discharge of gasses into the return manifold.

The theory of the sharing of a holding tank among a plurality of cylinders is based on the availability of time for operation of the discharge valve between successive operations of the return valves. The availability of such time is depicted in the bottom three graphs of Fig. 2 which plot the valve operation times for the case of a sharing of a single holding tank between two cylinders of a four-stroke, inline, four-cylinder engine. Upon a plotting of the operation times for valves of engines having some other configuration (possibly a rotary aircraft engine, or a twelve cylinder engine, by way of example), it may be found that there is sufficient time available for operation of a discharge valve with three return valves to enable a sharing of a holding tank among three cylinders. A further consideration in the sharing of a holding tank among multiple cylinders is the location of the cylinders in an engine; the cylinders need be close enough to facilitate fluidic communication between each of the cylinders and the holding tank.

It is to be understood that the above-described embodiments of the invention are illustrative only, and that modifications thereof may occur to those skilled in the art. Accordingly, this invention is not to be regarded as limited to the embodiments disclosed herein, but is to be limited only as defined by the appended claims.

## Claims

1. An internal combustion engine comprising:
a cylinder head, a plurality of cylinders connecting to said cylinder head, and a plurality of pistons movable with reciprocating motion within respective ones of said cylinders, the piston motion in the respective cylinders providing a succession of four strokes including an induction stroke, a compression stroke, a power stroke and an exhaust stroke, wherein a maximum spacing of a piston from the cylinder head defines a maximum volume of a combustion chamber in a cylinder of the engine, wherein the engine is a gasoline engine or a diesel engine, and wherein each of the cylinders is provided with a return port;
wherein the compression stroke serves to compress a quantity of gas within the combustion chamber in preparation for the power stroke, the compression-stroke gas being a mixture of air and fuel in the gasoline engine, or air without fuel in the diesel engine, the compression stroke providing a reduction in volume of the gas **characterized by** a compression ratio;
the power stroke provides for an expansion in volume of a quantity of gas within the combustion chamber, **characterized by** an expansion ratio, the gas in the power stroke being a mixture of air, fuel, and products of combustion;
the engine further comprises a return manifold for coupling a portion of the quantity of the gas from each of the combustion chambers in respective ones of the cylinders during the compression stroke to a source of the compression-stroke gas;
a holding tank, and a discharge valve providing fluidic communication between the holding tank and the return manifold;
a valve assembly comprising a plurality of return valves located in the return ports of respective ones of the plurality of the cylinders for providing fluidic communication between the holding tank and the respective ones of the plurality of cylinders to enable a sharing of a single holding tank by the plurality of cylinders; and
wherein the holding tank and the valve assembly are operative to receive from each of the cylinders a portion of the quantity of the gas contained within the combustion chamber during the compression stroke and subsequently to discharge the cylinder gas via the discharge valve into the return manifold, the return manifold with the holding tank and the valve assembly serving to reduce the compression ratio to a value less than the expansion ratio.

2. The engine according to claim 1, wherein the valve assembly staggers operation of the return valves with the discharge valve such that an opening of any one of the discharge and the return valves can occur only if all of the other of the discharge and the return valves are closed.

3. The engine according to claim 1, wherein the valve assembly has a housing disposed within the cylinder head, and said holding tank and said discharge valve are located in the housing of the valve assembly.

4. The engine according to claim 3, wherein the holding tank extends with a relatively long dimension in a plane generally perpendicular to an axis of a cylinder, and extends with a relatively short dimension in a direction generally parallel to the axis of the cylinder to minimize an overall height of the engine.

5. The engine according to claim 3, wherein said plurality of cylinders is a first plurality of cylinders, the engine further comprises a second plurality of cylinders connecting to said cylinder head and having pistons movable with reciprocating motion within respective ones of said second plurality of cylinders;
the holding tank is a first holding tank and the discharge valve is a first discharge valve, the valve assembly further comprises a second holding tank and a second discharge valve, the second discharge valve providing fluidic communication between the second holding tank and the return manifold; and
the plurality of return valves is a first plurality of return valves, the valve assembly further comprises a second plurality of return valves providing fluidic communication between the second holding tank and respective cylinders of the second plurality of cylinders.

6. The engine according to claim 5, wherein:
said first plurality of cylinders consists of two cylinders and said second plurality of cylinders consists of two cylinders;
first and second pistons in the two cylinders of said first plurality of cylinders translate within their respective cylinders in unison such that both the first and the second pistons are moving within their respective cylinders towards the cylinder head concurrently, but wherein the operation of the second piston is delayed from the operation of the first piston by one half of the four-stroke cycle such that the exhaust stroke of the first piston takes place during the compression stroke of the second piston;
first and second pistons in the two cylinders of said second plurality of cylinders translate within their respective cylinders in unison such that both the first and the second pistons are moving within their respective cylinders towards the cylinder head concurrently, but wherein the operation of the second piston is delayed from the operation of the first piston by one half of the four-stroke cycle; and
operation of the pistons of the second plurality of cylinders is delayed relative to the operation of the pistons of the first plurality of cylinders by one quarter of the four-stroke cycle such that the pistons of the first plurality of cylinders advance toward the cylinder head while the pistons of the second plurality of cylinders retract away from the cylinder head.

7. The engine according to claim 6, wherein:
in each of the cylinders of the first plurality of cylinders, the return valve associated with the cylinder opens during a portion of the compression stroke of the cylinder to transfer gas from the cylinder to the first holding tank, and the first discharge valve opens during a portion of the following power stroke to transfer gas from the first holding tank to the return manifold;
in each of the cylinders of the second plurality of cylinders, the return valve associated with the cylinder opens during a portion of the compression stroke of the cylinder to transfer gas from the cylinder to the second holding tank, and the second discharge valve opens during a portion of the following power stroke to transfer gas from the second holding tank to the return manifold; and
operations of the first and the second discharge valves are staggered by the one-quarter cycle delay of the four-stroke cycle between operations of the first plurality of cylinders and the second plurality of cylinders to provide that one of the discharge valves is open only during a period of time when the other of the discharge valves is closed resulting in improved uniformity in the discharge of gasses into the return manifold.
